# EUROPEAN PATENT APPLICATION

(11) **EP 4 488 455 A1**
(43) Date of publication of application: **08.01.2025**
(21) Application number: 24181989.5
(22) Date of filing: 13.06.2024
(51) Int. Cl.: E02F 9/20

(54) **WORK MACHINE**

(30) Priority: 30.06.2023 JP 2023107635
(71) Applicant: Yanmar Holdings Co., Ltd., Osaka-shi, Osaka (JP)
(72) Inventor: TAKEDA, Kazuki, Chikugo-shi (JP); SHIMADA, Masaru, Chikugo-shi (JP); MIKI, Takahiro, Chikugo-shi (JP)
(74) Representative: Dennemeyer & Associates S.A.

(57) **Abstract**

[Problem] To provide a work machine capable of improving the operability of a display device of the work machine without interfering with the operability of the work machine using operation levers.

[Solution] A work machine includes a first lever arranged next to one side of an operator's seat to operate a work unit, a second lever arranged on one side of the first lever to operate a soil removing device, a display device arranged in front of the operator's seat, the first lever, and the second lever, and a jog dial for operating the display device. The jog dial is positioned between the first lever and the second lever at a position facing the operator's seat from the back.

## Description

### TECHNICAL FIELD

The present invention relates to a work machine.

### BACKGROUND ART

As a related technology, there is known a work machine in which a jog dial, which is installed in the vicinity of a lower part of an operation lever installed on the side of a seat to operate a display device of the work machine, is arranged so as to overlap a dozer lever that is arranged outside the operation lever when viewed from the rear side closer to the front of the lower part of the operation lever, (see Patent Document 1)

### PRIOR ART DOCUMENT

### PATENT DOCUMENT

Patent Document 1: Japanese Patent Application Laid-Open No. 2021-185306

### SUMMARY OF INVENTION

### TECHNICAL PROBLEM

Since the jog dial is arranged to overlap the front of the dozer lever as viewed from a position facing an operator's seat, when an operator tries to operate the dozer lever after operating the display device with the jog dial, the operator needs to grip the dozer lever by pulling his/her arm so as not to contact the dozer lever with the arm and needs to be careful about malfunction.

In another aspect, there is also a work machine which allows an operator to start an engine by entering a PIN code with a keypad while the PIN code is displayed on a display device after the key-on is performed. In such the work machine, there is a demand for smoothly shifting to a series of actions in which an operator operates the display device by a jog dial after entering the PIN code with the keypad, performs the setting of the work machine, and operates operation levers including a dozer lever.

The present invention has been made in view of the above-described problems of the prior art, and an object of the present invention is to provide a work machine that can improve the operability of a display device of the work machine without interfering with the operability of the work machine using operation levers.

### SOLUTION TO PROBLEM

A work machine according to one aspect of the present invention, includes an upper body, which is supported on a lower traveling body equipped with a soil removing device to be rotatable, and a work unit supported by the upper body. The work machine further includes a first lever arranged next to one side of an operator's seat of the work machine to operate the work unit, a second lever arranged on one side of the first lever to operate the soil removing device, a display device arranged in front of the operator's seat, the first lever, and the second lever, and a jog dial for operating the display device. The jog dial is disposed between the first and second levers at a position facing the operator's seat from the back.

### ADVANTAGEOUS EFFECTS OF INVENTION

According to the present invention, it is possible to provide a work machine which can improve the operability of a display device of the work machine without interfering with the operability of the work machine using operation levers.

### BRIEF DESCRIPTION OF DRAWINGS

FIG. 1 is a left side view of a hydraulic excavator according to a first embodiment of the present invention.
FIG. 2 is a plan view of an operator's seat of the hydraulic excavator according to the first embodiment of the invention.
FIG. 3 is an example of a schematic diagram of an operator's seat of the hydraulic excavator according to the first embodiment of the invention when viewed from the back of a seat.
FIG. 4 is a plan view of a jog dial of the hydraulic excavator according to the first embodiment of the invention.
FIG. 5 is a plan view of a keypad of the hydraulic excavator according to the first embodiment of the invention.
FIG. 6 is a plan view of the operator's seat of the hydraulic excavator according to a second embodiment of the invention.
FIG. 7 is an example of a schematic diagram of the operator's seat of the hydraulic excavator according to the second embodiment of the invention when viewed from the back of the seat.
FIG. 8 is a plan view of the operator's seat of the hydraulic excavator according to a modification of the second embodiment of the invention.

### DESCRIPTION OF EMBODIMENTS

Hereinafter, a first embodiment according to the present invention will be described in detail with reference to the accompanying drawings, taking a hydraulic excavator 100 as a representative example of the work machine of the invention. Note that a direction in which a work unit 400 is mounted on an upper swivel body 300 is assumed to be the front and the opposite direction is assumed to be the rear.

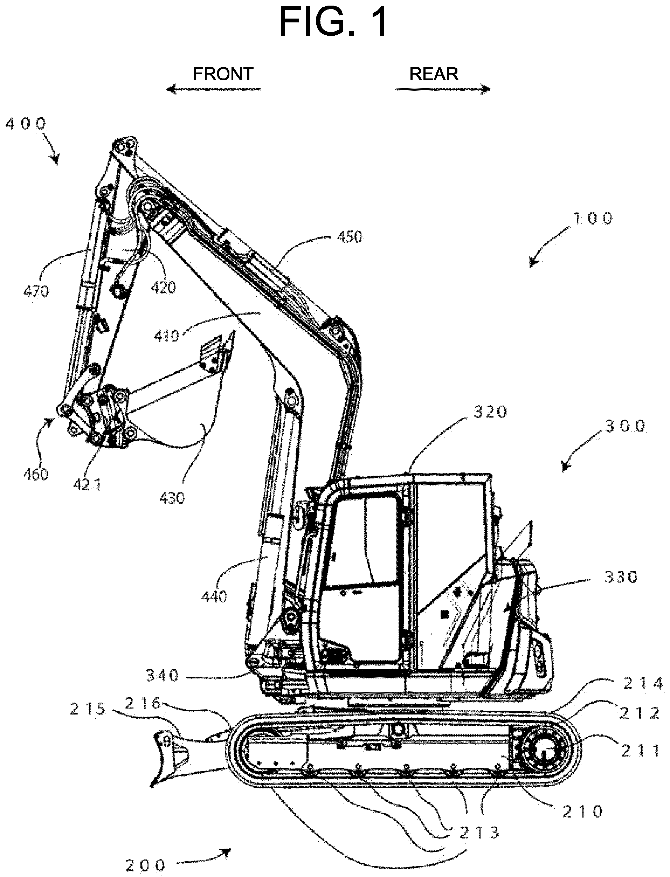

As shown in FIG. 1, the hydraulic excavator 100 includes a self-propelled lower traveling body 200, an upper swivel body 300 supported on the lower traveling body 200 to be pivotable, and the work unit 400 supported to be vertically rotatable in front of the upper swivel body 300.

The lower traveling body 200 has a center frame (not shown) and side frames 210 symmetrically paired with respect to the center frame and extending in the longitudinal direction. Driving wheels 212 driven by traveling motors 211 are installed on rear ends of the right and left side frames 210. A plurality of idler wheels 213 are arranged forward. The driving wheels 212 and the idler wheels 213 are wound with crawler belts 214. Further, a soil removing device 215 is supported at the front of the center frame and operated to be raised and lowered by the expansion and contraction of a blade cylinder 216 connecting the soil removing device 215 and the center frame.

The upper swivel body 300 includes a cabin 320 arranged from the front to the rear of a machine body on one side of the machine body to cover an operator's seat 310, an engine room 330 formed from the other side of the machine body to the rear of the machine body, and a swing post 340 supported by a protrusion part of the front end of the machine body to be laterally rotatable and supporting the work unit 400 to be vertically rotatable.

The work unit 400 includes a boom 410 supported by the swing post 340 to be vertically rotatable, an arm 420 mounted on a tip of the boom 410 to be vertically rotatable, and a bucket 430 detachably mounted on a tip of the arm 420 through a quick hitch 421 to be rotatable. A swing cylinder (not shown) for moving the swing post 340 is arranged on the right side of the frame of the upper swivel body 300.

The boom cylinder 440 is installed in front of and below the boom 410 and operated to be raised and lowered by the expansion and contraction of the boom cylinder 440.

An arm cylinder 450 is installed above the boom 410. The arm 420 performs dumping operation in which it rotates forward and cloud operation in which it rotates rearward by the expansion and contraction of the arm cylinder 450.

A bucket cylinder 470 is arranged in front of (above) the arm 420 and connects to the arm 420 and the bucket 430 through a bucket link 460. The bucket 430 performs the dumping operation in which it rotates forward and the cloud operation in which it rotates rearward by the expansion and contraction of the bucket cylinder 470.

The engine room 330 is provided with an engine (not shown), a variable displacement pump (not shown), which is driven by the engine and pumps hydraulic oil to a plurality of actuators for moving the hydraulic excavator 100 such as the boom cylinder 440 and the arm cylinder 450, and a plurality of devices such as a control valve (not shown) which is an assembly of direction switching valves for controlling the corresponding actuators.

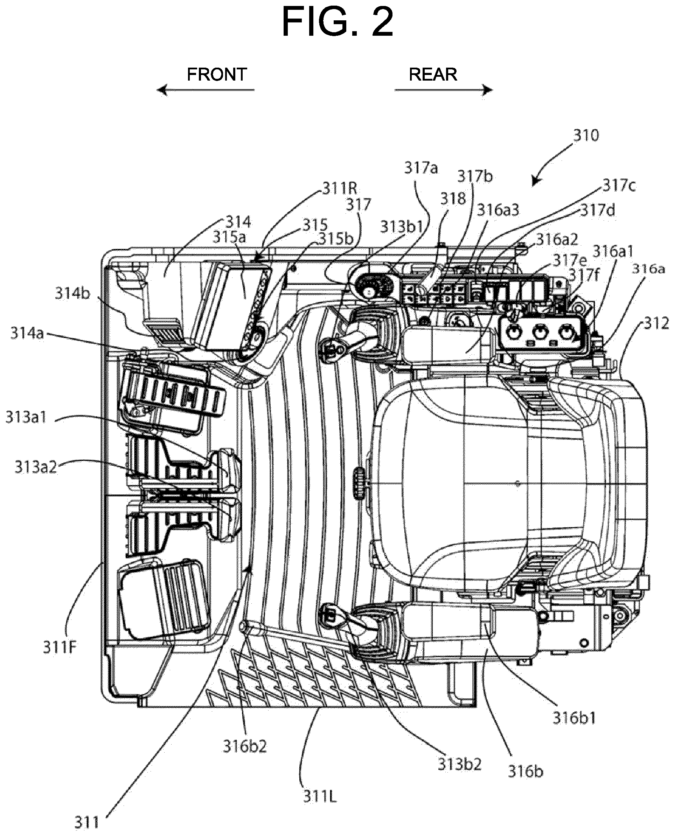

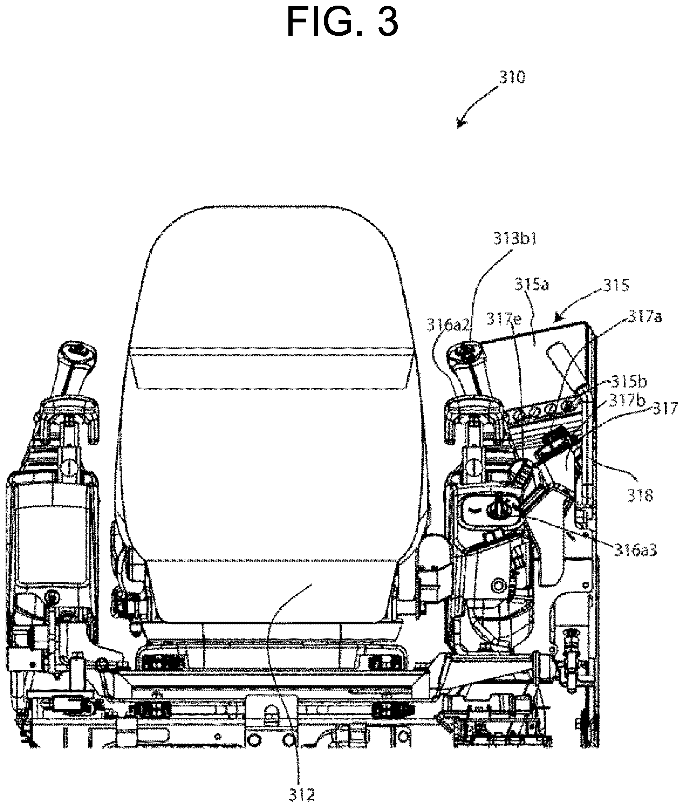

FIG. 2 is a plan view of the operator's seat 310 and FIG. 3 is a schematic diagram of the operator's seat 310 when viewed from the back of the seat 312. A right side wall 311R having a window of a cabin 320 on its upper part is arranged on one side (the right side) of a floor material 311. A boarding port 311L configured to be openable/closable with a door is arranged on the other side (the left side) of the floor material 311. A windshield 311F is arranged in a front end of the floor material 311. A seat 312 is arranged in the rear of the floor material 311.

In the front of the floor material 311, a pair of right and left traveling levers 313a1 and 313a2, which are erected and have pedals on their base ends, are provided so as to face the windshield 311F. The pair of right and left traveling levers 313a1 and 313a2 can make the hydraulic excavator 100 travel back and forth by tilting the traveling levers back and forth respectively.

A dashboard 314, which is formed to be tilted downward from the front to the rear along the right side wall 311R, is provided in the front of the floor material 311. An upper part of the dashboard 314 is provided with a liquid crystal monitor 315. Both of a display unit 315a of the liquid crystal monitor 315 and an operation button 315b to operate the liquid crystal monitor 315 installed below the display unit are arranged so as to face the direction of the seat 312.

A duct through which air discharged from an air-conditioning unit flows is formed inside the dashboard 314. An air-conditioning outlet 314a through which the conditioned air is blown out is arranged below the liquid crystal monitor 315 to face the direction of the seat 312. Further, an outlet 314b for a defroster through which the conditioned air is blown out is arranged in front of and below the liquid crystal monitor 315 so as to face the boarding port 311L.

A lever console 316a on which an operation lever 313b1 is erected in the front upper end is arranged on the right side that is one side of the seat 312 and a lever console 316b on which an operation lever 313b2 is erected in the front upper end is arranged on the left side (the boarding port 311L side) that is the other side of the seat 312.

The boom 450 is lowered when the operation lever 313b1 is tilted forward and the boom 450 is raised when the operation lever 313b1 is tilted rearward. The arm 410 performs the dumping operation when the operation lever 313b2 is tilted forward and the arm 410 performs the cloud operation when the operation lever 313b2 is tilted rearward, i.e., the operation levers 313b1 and 313b2 can operate the work unit 400.

The lever console 316b extends while being tilted rearward from a position slightly ahead of the seat 312 and includes a cutoff lever 316b2 erected forward on its tip and an armrest 316b1 behind the operation lever 313b2. Further, when the cutoff lever 316b2 is pulled up rearward, the lever console 316b rotates rearward to shut off the pilot pressure for controlling the control valve so that the operation levers 313b1 and 313b2 and the traveling levers 313a1 and 313a2 become inoperable.

The lever console 316a extends while being titled rearward from a position slightly ahead of the seat 312 and extends straight from the middle to the vicinity of the rear end of the seat 312 and an operation switch 316a1 for the air conditioner is arranged on an upper part of this position.

The lever console 316a includes an armrest 316a2 arranged behind the operation lever 313b1 and a key switch 316a3 for activating the engine mounted on the tilted part below the armrest 316a2 and in front of the operation switch 316a1 for the air conditioner.

A console 317 is arranged on one side (the right side) of the lever console 316a, an operation lever 318 for operating the soil removing device 215 is erected between the console 317 and the right side wall 311R, and a gripping part of the operation lever 318 is tilted toward the seat 312 so as to be positioned above the console 317. That is, the operation lever 318 is arranged on one side, i.e., the right side of the operation lever 313b1 and the operation lever 318 is arranged on the right side (next to one side) of the armrest 316a2.

The console 317 extends from the vicinity of the front end of the lever console 316a to a position where it does not reach the rear end of the lever console 316a.

A jog dial 317a for operating the display device 315 is arranged in the front of an upper surface of the console 317, a keypad 317b is arranged behind the jog dial, and an operation switch 317d for operating a power switch 317c, which activates a quick hitch 421 to replace the bucket 430 with another attachment, and the quick hitch 421 is arranged behind the keypad. An accelerator 317e for setting the engine speed and a power socket 317f are arranged toward the rear end on a rear side surface of the console.

An upper surface of the console 317 is formed to be tilted toward the seat 312 from one side (the right side). The jog dial 317a, the keypad 317b, and the power socket 317f are arranged to be tilted downward so as to facilitate the operation by an operator sitting in the seat 312.

The jog dial 317a is arranged with a gentler slope than that of the accelerator 317e at a position facilitating the operator to operate the display device 315a.

Further, since the jog dial 317a is arranged on the right front side below the armrest 316a2 and the accelerator 317e is arranged at a position lower than that of the jog dial 317a behind the right side below the armrest 316a2, the frequently used jog dial 317a is arranged such that an operator can easily use the jog dial while putting his or her elbow on the armrest 316a2. The accelerator 317e that is more infrequently used than the jog dial 317a is arranged such that an operator can easily use the accelerator by releasing his or her elbow from the armrest 316a2.

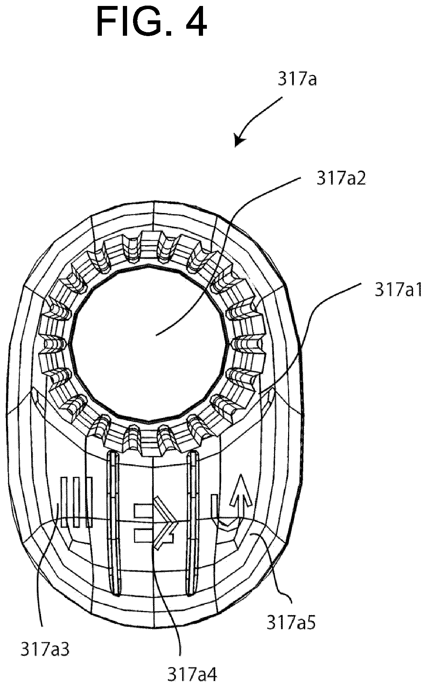

FIG. 4 is a plan view of the jog dial 317a. The jog dial 317a includes a dial unit 317a1, which is protruded from a box body and moves a highlight part of an icon displayed on the display unit 315a of the display device 315 by rotation operation, a button 317a2 positioned in the center of the dial unit to select the highlighted icon and execute the determination for shifting a screen and the like, a button 317a3 positioned on the lower left side of the dial unit to shift the screen to a menu screen, a button 317a4 arranged next to the button 317a3 to shift the screen to a home screen, and a button 317a5 arranged next to the button 317a4 to shift the screen to a previous screen.

The jog dial 317a is arranged to facilitate the dial operation and the operation of the buttons 317a3, 317a4, and 317a5 from the seat 312 by arranging the protruded dial unit 317a1 toward the display device 315.

The jog dial 317a is arranged next to the base end of the operation lever 313b1 side by side and arranged at a position where an operator can easily operate the jog dial 317a and the operation lever 313b1 while putting his or her elbow on the armrest 316a2.

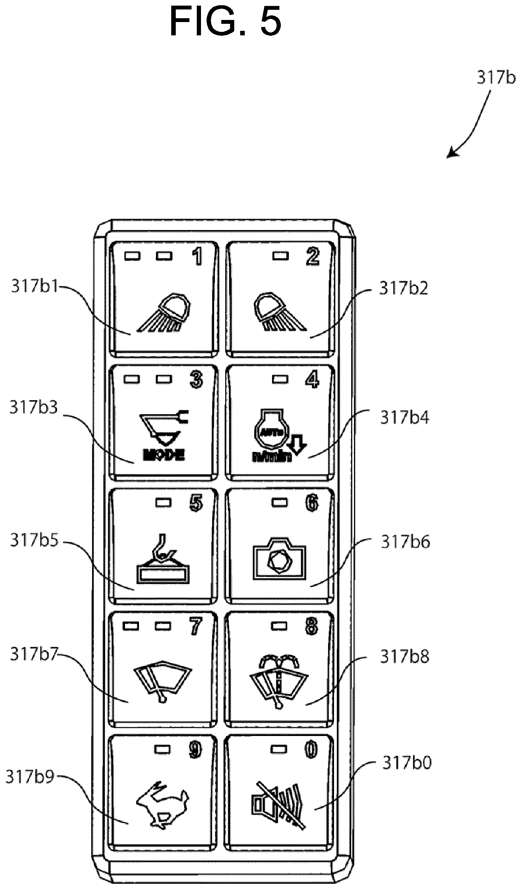

FIG. 5 is a plan view of the keypad 317b. The keypad 317b includes a key 31 7b 1, a key 317b2, a key 317b3, a key 317b4, a key 317b5, a key 317b6, a key 317b7, a key 317b8, a key 317b9, and a key 317b0 which are arranged in two rows in the longitudinal direction. The numbers 1 to 9 and 0 are respectively printed on the keys.

The keypad 317b is arranged above the right side of the key switch 316a3. When turning the engine key 316a3 to a key-on position, an operator further stretches his or her hand upward to press the keys of the keypad 317b in accordance with the display requesting a password, which is displayed on the display unit 315a, so as to enter the password. When the password is authenticated, the engine is allowed to start and the engine is activated by turning the engine key 316a3 to a start position. The keypad 317b is an authentication device for performing authentication operation to permit the activation of the engine (a prime mover) of the hydraulic excavator 100 and enables a series of operation smoothly in which after turning the key switch 316a3 to the key-on position, the password is entered with the keypad 317b, the display device 315 is operated by the jog dial 317a, and the engine key 316a3 is turned to the start position.

The keypad 317b is printed with icons representing functions of the hydraulic excavator 100 as well as the numbers for entering the password. The keypad 317b has functions as function enable switches that enable the functions represented by the icons.

The keys 317b1 and 317b2 are respectively printed with icons representing lamps. When the key 317b1 is pressed, a light for illuminating the front shines. When the key 317b2 is pressed, a light for illuminating the rear shines.

The key 317b3 is a switch for selecting an eco mode that prioritizes fuel saving by reducing the engine speed. The key 317b4 is a switch for selecting the automatic deceleration in which the engine speed is reduced to the idle speed when the operation levers are not operated for a certain period of time.

The key 317b5 is a switch for selecting a crane mode for performing the hoisting work safely. The key 317b6 is a switch for switching monitoring images around the hydraulic excavator 100 displayed on the display unit 315a.

The key 317b7 is a switch for moving a wiper. The key 317b8 is a switch for spraying washer fluid as well as moving the wiper.

The key 317b9 is a switch for switching a traveling motor 211 to a second speed from a first speed. The key 317b0 is a switch for stopping alarm sound that is sounded during the traveling of the hydraulic excavator 100.

Some functions of the hydraulic excavator 100 assigned to the keypad 317b can be enabled by operating the display device 315 with the jog dial 317a.

That is, frequently-used routine operation can be easily performed by arranging the keypad 317b, which serves as the authentication device for permitting the driving of the prime mover of the hydraulic excavator 100 and includes the switches assigned with the same functions as the operation capable of enabling the functions of the hydraulic excavator 100 by operating the display device 315 with the jog dial 317a, at a position closer to the armrest 316a2 than the jog dial 317a.

It can be said that the jog dial 317a and the keypad 317b are positioned between the operation lever 313b1 and the operation lever 318 and also positioned between the armrest 316b1 and the operation lever 318 when viewed from the position facing the operator's seat 312 from the back. According to these configurations, the display device 315 can be operated smoothly by the jog dial 317a without impairing the operability of the operation levers 313b1 and 318.

The gripping part of the operation lever 318 is tilted toward the seat 312 and is positioned above the jog dial 317a and the keypad 317b when viewed from the position facing the operator's seat 312 from the back. According to these configurations, the motion between the operation of the operation lever 318 and the operation of the jog dial 317a can be smoothly performed.

The display unit 315a is arranged above the jog dial 317a at the position facing the operator's seat 312 from the back so that the operability of the jog dial 317a and the visibility of the display unit 315a are ensured.

At the position facing the operator's seat 312 from the back, the operation button 315b is arranged between the jog dial 317a and the display unit 315a so that the operability of the jog dial 317a and the operation button 315b and the visibility of the display unit 315a are ensured.

At the position facing the operator's seat 312 from the back, the accelerator 317e is arranged above the right side (one side) of the key switch 316a3. The jog dial 317a is further arranged above the right side (one side) of the accelerator 317e. That is, the operability for the operator is improved by arranging a frequently-used operation tool at an upper position.

A second embodiment according to the present invention will be described in detail below. Note that the explanation of the parts common to those of the first embodiment will be omitted.

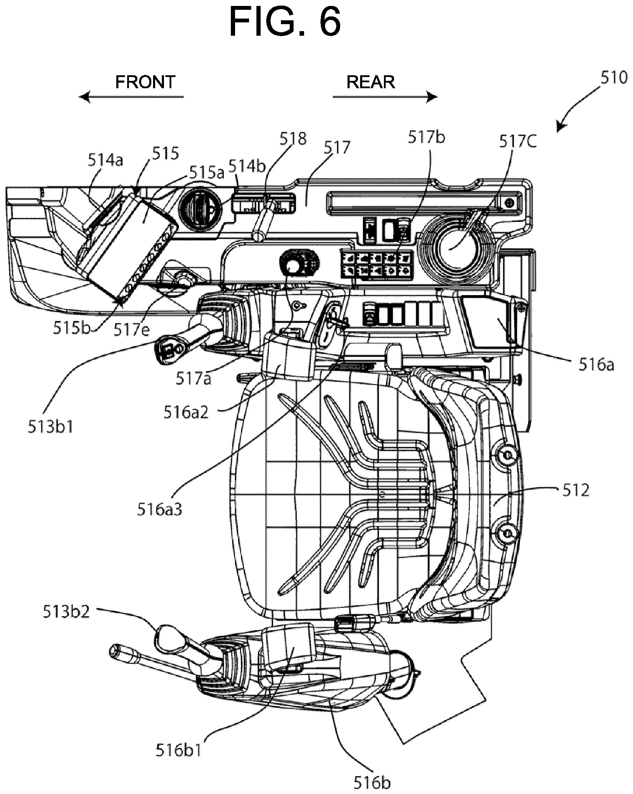

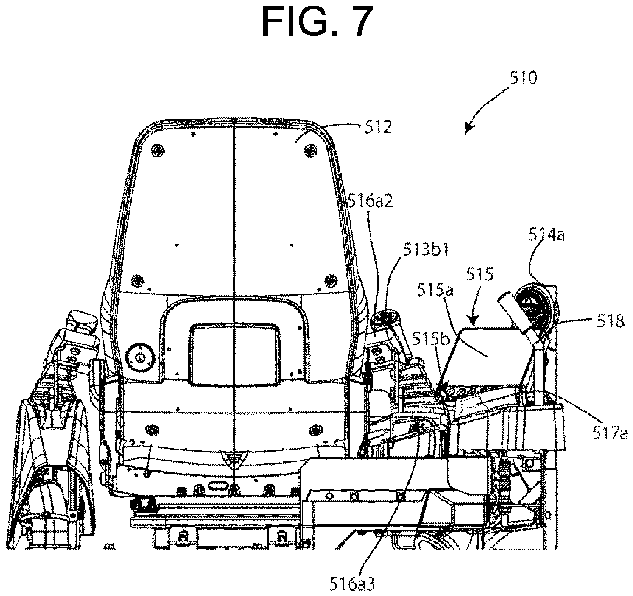

FIG. 6 is a plan view of an operator's seat 510 and a floor surface and a part of devices arranged on the floor surface are omitted. FIG. 7 is a schematic diagram of the operator's seat 510 when viewed from the back of a seat 512.

A lever console 516a on which an operation lever 513b1 is erected in a front upper end and an armrest 516a2 is arranged behind the operation lever 513b1, is arranged on the right side that is one side of the seat 512. A lever console 516b on which an operation lever 513b2 is erected in a front upper end and an armrest 516b1 is arranged behind the operation lever 513b2, is arranged on the left side that is the other side of the seat 512. The operation levers 513b1 and 513b2 can operate the work unit 400. The lever console 516a forms a tilted surface which is tilted downward behind the armrest 516a2 and a key switch 516a3 is arranged on the tilted surface.

A liquid crystal monitor 515 is provided on the front of a console 517 which is formed along the right side of the lever console 516a from the front to the rear of the seat 512. A display unit 515a of the liquid crystal monitor 515 and operation buttons 515b for operating the liquid crystal monitor 515 installed below the display unit are both arranged to face the direction of the seat 512.

A duct through which air discharged from the air-conditioning unit flows is formed inside the console 517. Air-conditioning outlets 514a and 514b through which the conditioned air is blown out are arranged above and below the right side of the liquid crystal monitor 515.

An operation lever 518 for operating the soil removing device 215 is erected on the right side of the console 517 and a gripping part of the operation lever 518 is tilted toward the seat 512 so as to be positioned above the console 517.

A jog dial 517a for operating the display device 515 is arranged behind the operation lever 513b1 on an upper surface of the console 517 and a keypad 517b, which is an authentication device for performing authentication operation to permit the activation of an engine (a prime mover) of the hydraulic excavator 100, is arranged behind the jog dial. Further, an accommodation part 517c is formed behind the keypad such that the upper surface of the console 517 is recessed and the accommodation part is raised to surround the periphery of the recessed part. The accommodation part 517c accommodates a mobile phone and the like as well as drink.

An accelerator 517e is arranged at a position in which the upper side of the console 517 is recessed, in front of the operation lever 513b1 and behind the display device 515.

The jog dial 517a is positioned behind the right side of the operation lever 513b1, which is arranged on the right side (one side) in the vicinity of the front of the seat 512 arranged behind the display device 515 that is arranged on the front side of the operator's seat 510, and also positioned behind the left side of the operation lever 518 at the neutral position. The jog dial is further arranged in front of the keypad 517b. The accelerator 517e is arranged in front of the operation lever 513b1. That is, the operability is enhanced by arranging a frequently-used operation tool at a position close to the armrest 516a2.

It can be said that the jog dial 517a is positioned between the operation lever 513b1 and the operation lever 518 and also positioned between the armrest 516a2 and the operation lever 518 when viewed from the position facing the operator's seat 512 from the back. According to these configurations, the display device 515 can be smoothly operated by the jog dial 517a without impairing the operability of the operation levers 513b1 and 518. Note that although the jog dial 517a is located at a position hidden by the accommodation part 517c in this embodiment, it does not interfere with the arrangement in which the jog dial is positioned between the operation lever 513b1 and the operation lever 518.

Next, a modification of the second embodiment of the present invention will be described. Note that the description of the parts common to those in the first and second embodiments will be omitted.

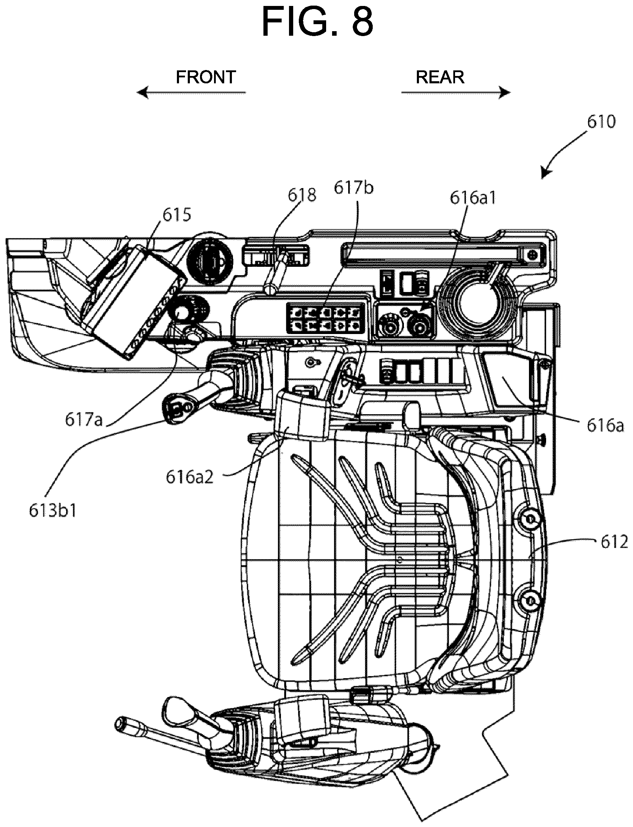

FIG. 8 is a plan view of an operator's seat 610 and a floor surface and a part of devices arranged on the floor surface are omitted.

A lever console 616a on which an operation lever 613b1 is erected in a front upper end and an armrest 616a2 is arranged behind the operation lever 613b1, is arranged on the right side that is one side of a seat 612.

A liquid crystal monitor 615 is provided on the front of a console 617 formed along the right side of the lever console 616a. An operation lever 618 for operating the soil removing device 215 is erected on the right side of the console 617.

A jog dial 617a for operating the display device 615 is arranged on an upper surface of the console 617 and in front of the operation lever 613b1. A keypad 617b, which is an authentication device for performing authentication operation to permit the activation of the prime mover of the hydraulic excavator 100, is arranged behind the jog dial. An operation switch 616a1 for the air conditioner is further arranged behind the keypad.

The jog dial 617a is positioned in front of the right side of the operation lever 613b1, which is arranged on the right side (one side) in the vicinity of the front of the seat 612 arranged behind the display device 615 that is arranged on the front side of the operator's seat 610, and positioned in front of the left side of the operation lever 618 at the neutral position. The jog dial is further arranged in front of the keypad 617b. According to this configuration, the operation levers for operating the work unit 400 and the soil removing device 215 and the keypad 617b can be arranged at the positions close to the armrest 616a2 so that the operability of other operation tools can be prioritized over the operability of the jog dial 617a.

The authentication devices of the first embodiment, the second embodiment, and the modification of the second embodiment may be the biometric authentication such as fingerprint authentication and vein authentication.

The invention according to the embodiments of the present invention can be specified as in the following appendices.

[Appendix 1] A work machine includes an upper body, which is supported by a lower traveling body equipped with a soil removing device to be rotatable, and a work unit supported by the upper body. The work machine further includes a first lever arranged next to one side of an operator's seat of the work machine to operate the work unit, a second lever arranged on one side of the first lever to operate the soil removing device, a display device arranged in front of the operator's seat, the first lever, and the second lever, and a jog dial for operating the display device. The jog dial is positioned between the first lever and the second lever at a position facing the operator's seat from the back.

[Appendix 2] In the work machine according to Appendix 1, the jog dial is arranged next to the first lever in plan view.

[Appendix 3] In the work machine according to Appendix 1 or Appendix 2, a display unit of the display device is positioned above the jog dial at the position facing the operator's seat from the back.

[Appendix 4] In the work machine according to any one of Appendix 1 to Appendix 3, the display device includes an operation tool for operating the display device and the operation tool is arranged between the display unit and the jog dial at the position facing the operator's seat from the back.

[Appendix 5] In the work machine according to any one of Appendix 1 to Appendix 4, the key switch for activating the prime mover of the work machine is arranged on a console on which the first lever is erected, behind the first lever and the jog dial is arranged above the key switch at the position facing the operator's seat from the back.

[Appendix 6] The work machine according to any one of Appendix 1 to Appendix 5 includes an authentication device, which is provided adjacent to the jog dial and performs authentication operation for permitting the activation of the prime mover after the key switch is keyed on.

[Appendix 7] In the work machine according to any one of Appendix 1 to Appendix 6, the jog dial is arranged in front of the authentication device.

[Appendix 8] In the work machine according to any one of Appendix 1 to Appendix 6, the authentication device is arranged next to the second lever.

The various configurations described in the first and second embodiments and the modification thereof can be appropriately combined and employed.

Although the explanation has been given using the hydraulic excavator as an example of the work machine, the work machine is not limited to the hydraulic excavator and may be not only a construction machine such as a compact truck loader and a wheel loader, but also another work machine such as a tractor. In addition, although the explanation has been given using the engine as the prime mover, an electric motor may also be used.

Although the embodiments of the present invention have been described above, the scope of the invention is not limited thereto, and can be expanded or modified without departing from the spirit of the invention.

### INDUSTRIAL APPLICABILITY

The present invention relates to a work machine and has industrial applicability.

### REFERENCE SIGNS LIST

- 315: Display device
- 312: Operator's seat
- 313b1: First lever (operation lever)
- 318: Second lever (operation lever)
- 317a: Jog dial

## Claims

1. A work machine including an upper body pivotably supported by a lower traveling body equipped with a soil removing device and a work unit supported by the upper body, the work machine comprising:
a first lever arranged next to one side of an operator's seat of the work machine and operating the work unit;
a second lever arranged on one side of the first lever and operating the soil removing device;
a display device arranged in front of the operator's seat, the first lever, and the second lever; and
a jog dial for operating the display device,
wherein the jog dial is positioned between the first lever and the second lever at a position facing the operator's seat from the back.

2. The work machine according to claim 1, wherein the jog dial is arranged next to the first lever in plan view.

3. The work machine according to claim 1 or claim 2, wherein a display unit of the display device is positioned above the jog dial at the position facing the operator's seat from the back.

4. The work machine according to claim 3, wherein the display device includes an operation tool for operating the display device and the operation tool is arranged between the display unit and the jog dial at the position facing the operator's seat from the back.

5. The work machine according to claim 4, wherein a key switch for activating a prime mover of the work machine is arranged on a console on which the first lever is erected, behind the first lever, and the jog dial is arranged above the key switch at the position facing the operator's seat from the back.

6. The work machine according to claim 5, further comprising an authentication device that is provided adjacent to the jog dial and performs authentication operation for permitting the activation of the prime mover after the key switch is keyed on.

7. The work machine according to claim 6, wherein the jog dial is arranged in front of the authentication device.

8. The work machine according to claim 7, wherein the authentication device is arranged next to the second lever.
